(19) **Europäisches Patentamt / European Patent Office / Office européen des brevets**

(11) **EP 4 309 016 B1**

(12) **EUROPEAN PATENT SPECIFICATION**

(45) Date of publication and mention
of the grant of the patent:
**21.01.2026 Bulletin 2026/04**

(21) Application number: **22713663.7**

(22) Date of filing: **14.03.2022**

(51) International Patent Classification (IPC):
***A01D 46/26*** (2006.01)

(52) Cooperative Patent Classification (CPC):
**A01D 46/264; G05D 1/024; G05D 1/027**

(86) International application number:
**PCT/EP2022/056582**

(87) International publication number:
**WO 2022/194798 (22.09.2022 Gazette 2022/38)**

(54) **HARVESTING VEHICLE PROVIDED OF A SELF-LEVELLING SYSTEM**

ERNTEFAHRZEUG MIT EINEM SELBSTNIVELLIERUNGSSYSTEM

VÉHICULE DE RÉCOLTE POURVU D'UN SYSTÈME AUTONIVELANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.03.2021 IT 202100006422**

(43) Date of publication of application:
**24.01.2024 Bulletin 2024/04**

(73) Proprietor: **CNH Industrial Italia S.p.A.**
**10135 Turin (IT)**

(72) Inventors:
• **DI CECILIA, Luca**
**41123 Modena (IT)**
• **INFANTINI, Mauricio B.**
**18048-130 Sorocaba (BR)**

(74) Representative: **CNH Industrial IP Department**
**Leon Claeysstraat 3A**
**8210 Zedelgem (BE)**

(56) References cited:
CN-A- 111 645 478    US-A1- 2005 143 153
US-A1- 2019 261 550    US-B2- 7 771 260

**Description**

**Field of the invention**

The present invention relates to automatic adjustment of the vehicle geometry and in particular of the suspensions in the field of agricultural harvesters.

**Description of the prior art**

Orange trees are very sensitives to diseases. This is why farmers take a lot of care to avoid damages on trees. Broken branches and trunks damages allow bacterias and fungus to cause diseases.

Agricultural vehicles move on natural ground with variable conditions and different kind of terrain. Therefore, it is common for tractors and orange harvesters to damage branches and trunks during harvesting and spraying operations. Therefore, an accurate control of the machine operations is important to minimize both trees damages and future yield losses. When those machines operate on soil slope conditions it is more difficult to perform the operations without damaging the trees.

US2019/261550A1 discloses a method to predictively generate a travel path of an agriculture vehicle including properties of the terrain such a slope.

Indeed, the trees tend to be vertical irrespective of the terrain slope.

The present applicant has developed a four wheeled vehicle shaped as a building portal capable to move passing over crop rows. In particular, in operation, two wheels W are arranged on one side of the crop row and further two wheels are arranged one the opposite side of the same crop row, with a sort of bridge connecting all the wheels, such that the vehicle defines a central tunnel capable to pass over the crop row.

Hydraulic motors are arranged to drive each wheel such that no driveshaft is implemented, which could physically interfere with the crop row.

Two substantially vertical rotors are arranged in such a way to harvest the crop row on both the opposite sides, while the vehicle moves over the crop row itself.

The rotors are capable of rotating/vibrating at different RPMs in order to detach the fruits, for example oranges, from the branches of the trees alignment.

In addition, since orange/grape harvesters are vehicles with a high center of gravity, their propensity to rollover is also quite important when they are implemented on lateral sloping fields.

When the present applicant decided to face the above problem he implemented adjustable suspensions such that to compensate the lateral slope. In other words, the suspension of one side are raised and the suspensions of the opposite side are left unchanged or lowered in order to maintain the above rotors vertical and thus parallel to the tree trunk. An inclinometer or inertial sensor has been implemented to control the adjustable suspensions in a reactive fashion, however, there is a remarkable delay between the detection of a lateral slope and the corresponding compensation through suspensions or any other geometry variation of the vehicle.

Summary of the invention

Therefore, it is the main object of the present invention to provide a harvesting vehicle provided of a self-levelling system prompt and capable to timely compensate lateral slopes in a predictive fashion.

The main principle of the invention involves the use of a 3D sensor, such as a LiDAR, a stereo camera, a RADAR, or an ultrasonic array, to detect a lateral slope of the terrain ahead, and to timely adapt the vehicle geometry for compensating the vehicle inclination with respect to the slope detected.

The present approach minimizes the rotors/shakers impact on the trees, increases driver's comfort and prevents agricultural vehicle rollover.

The 3D sensor is arranged on the top of the vehicle, approximately aligned with a vehicle centerline and pointing at a certain angle downward.

The horizontal reference axis of the 3D sensor is considered to be parallel with a horizontal plane stably associated with the vehicle frame.

The present solution includes the following steps:

- Acquisition of a pointcloud with a single (or multiple) beam(s) by means of the 3D sensor, such as a LiDAR or a stereocamera, wherein each point has an associated intensity value, which corresponds to the reflectance at the specific LiDAR wavelength, for example 905nm, while in the case of a stereo camera, the reflectance is replaced with the RGB colour,
- a bottom left and a bottom right areas are selected while the remaining areas are deleted/neglected, by means of a mask, to identify the ground plane and estimate its angle with respect to the vehicle at a certain distance ahead, then

- considering that each point of the pointcloud is characterized by its $(x_i, y_i)$ coordinates and its reflectance or RGB colour, for each point calculation of a weight by attributing a higher weight to the points having a lower height $y_i$ and a lower reflectance or a darker colour, then

- calculation of a linear regression on the subset of points of the selected areas, having coordinates $(x_i, y_i)$ and their corresponding weights $w_i$, then

- calculation of the relative roll angle of the lateral slope with respect to the vehicle by linear regression, then

- controlling the vehicle geometry on the basis of said angle to timely compensate such slope variation.

These and further objects are achieved by means of the attached claims, which describe preferred embodiments of the invention, forming an integral part of the present description.

Brief description of the drawings

The invention will become fully clear from the following detailed description, given by way of a mere exemplifying and non-limiting example, to be read with reference to the attached drawing figures, wherein:

- Fig. 1 shows an example of harvesting vehicle provided of the present lateral slope detection system;

- Fig. 2 shows a pointcloud acquired with a 3D sensor arranged on the vehicle of figure 1,

- Fig. 3 and 4 show two operations carried out on the pointcloud of figure 2,

- Fig. 5 discloses a flowchart exemplary of the method carried out by the present invention. Here the dashed blocks are considered to be optional.

The same reference numerals and letters in the figures designate the same or functionally equivalent parts. According to the present invention, the term "second element" does not imply the presence of a "first element", first, second, etc.. are used only for improving the clarity of the description and they should not be interpreted in a limiting way.

Detailed description of the preferred embodiments

The present invention discloses a method which is continuously executed while the vehicle moves forward during harvesting.

The harvesting operation can be easily detected because the rotors are activated only when required.

When the vehicle is in harvesting operation it can be assumed that the vehicle centerline is at least approximately aligned with the crop row.

The crop can be any plantation to be worked, in particular of oranges, grapes, coffee, almonds, olives and similar row planted crops.

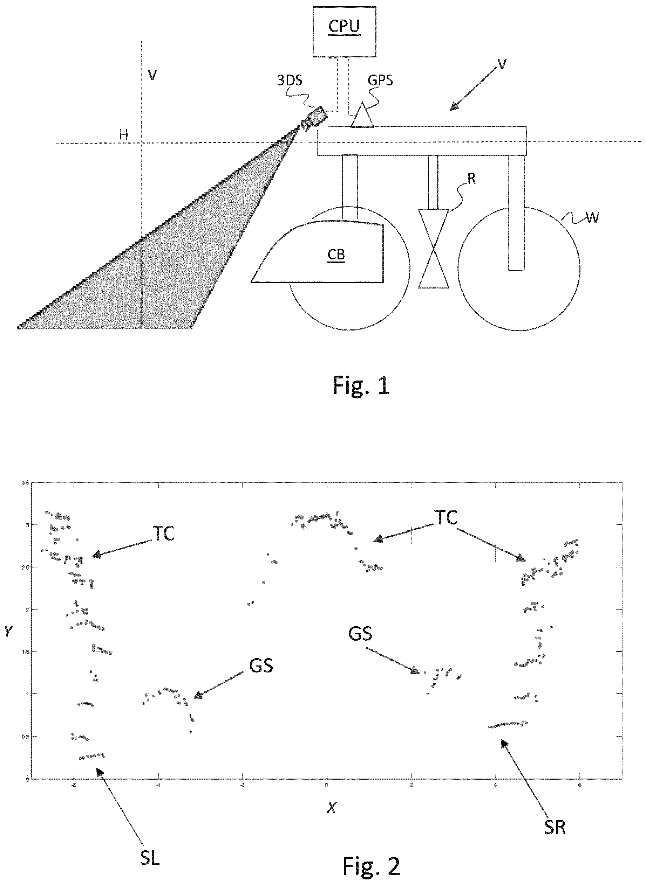

Fig. 1 discloses a side view of an agricultural vehicle modified according to the present invention.

The vehicle includes a frame F preferably shaped as a portal with a cabin CB arranged on one side and a couple of rotors R are arranged to shake the plantation branches to be worked while the vehicle moves forward.

Two wheels are arranged on one side of the vehicle and further two wheels W are arranged on the other side of the vehicles, such that the vehicle can pass over a plantation row.

A 3D sensor 3DS is arranged on the front top position of the vehicle to have a good visual of the scenario in front of the vehicle.

A control unit CPU is arranged to receive data generated by the 3D sensor and to control the geometry of the vehicle such that a horizontal plane H associated to the vehicle frame remain as much as possible horizontal irrespective of any lateral slope variation.

Figure 2 discloses a point cloud obtained by means of a LiDAR 3D sensor. The X axis of the point cloud is parallel to the horizontal plane associated to the vehicle frame.

It is assumed that the pointcloud is projected on a vertical plane V perpendicular to the longitudinal development of the vehicle.

In the higher portion of the pointcloud there are the points related to the tree canopy TC, while in the lower portion of the pointcloud the points related to the grass GS and to the soil SL can be identified.

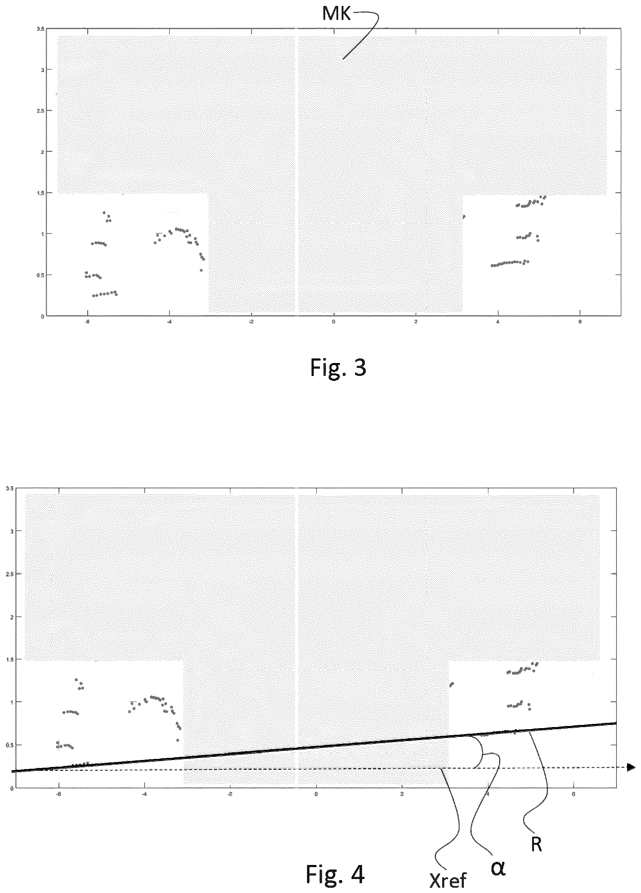

According to figure 3, the pointcloud is masked with a mask MK which leaves unchanged only the bottom left and bottom right portions of the pointcloud.

The mask has a T shape by leaving two rectangular areas free or uncovered; however, different shapes can be selected.

In other words, the points falling under the mask are deleted or simply neglected, to leave only the most interesting areas uncovered for the following elaborations. Now, the remaining points are associated with a weight such that the *i-th* point has a weight $w_i$ which is the higher as

- the lower is its position $y_i$ in the pointcloud and
- the lower is its reflectance $i_i$ or the darker is its color.

In mathematical terms, this concept can be expressed with:

$$w_i = \left(1 - {i_i}/{\max(i)}\right) * \left(1 - {y_i}/{\max(y)}\right)$$

Where $i_i$ is the reflectance or the brightness, max(i) is the maximum reflectance or maximum brightness and $y_i$ is the height position of the point in the pointcloud and max(y) is the height of the highest point in the pointcloud. This latter value, for simplicity, can be confused with the height of one of the unmasked windows on figure 3.

The computed weights $w_i$ and their associated points of the pointcloud $(x_i, y_i)$ are used to calculate a linear regression, since there is a high probability that such line equation matches the lateral slope of the terrain ahead.

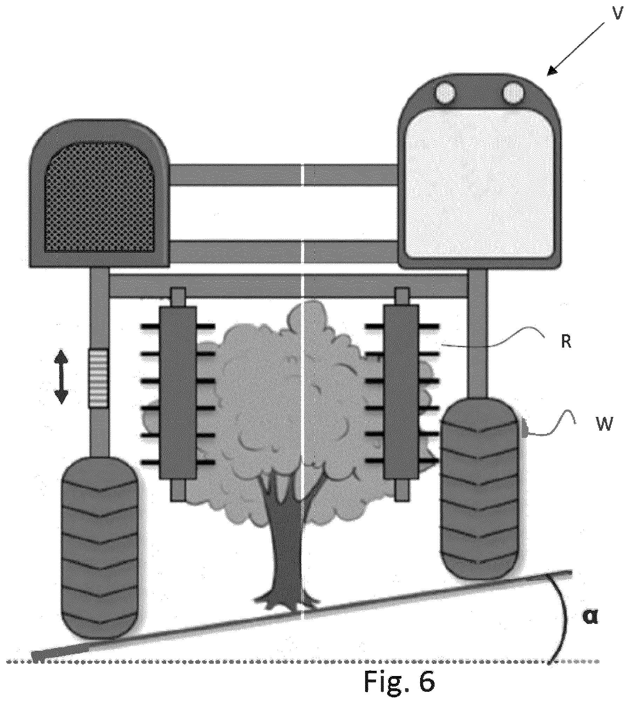

The linear regression operation returns an equation in form of Y = m*x + q. The α angle defined by the slope in respect of the horizontal plane H associated with the vehicle frame is calculated as *arctan(m),* and can be used to control the vehicle geometry such that to maintain the vehicle in horizontal condition irrespective of the lateral slope, as disclosed on figure 6. Conversely, the present control has the aim at maintaining the rotors parallel to the trees trunks.

The angle calculation can be also used to evaluate the rollover risk.

In particular, when the angle exceeds a predetermined threshold the driver is warned and preferably the vehicle is stopped.

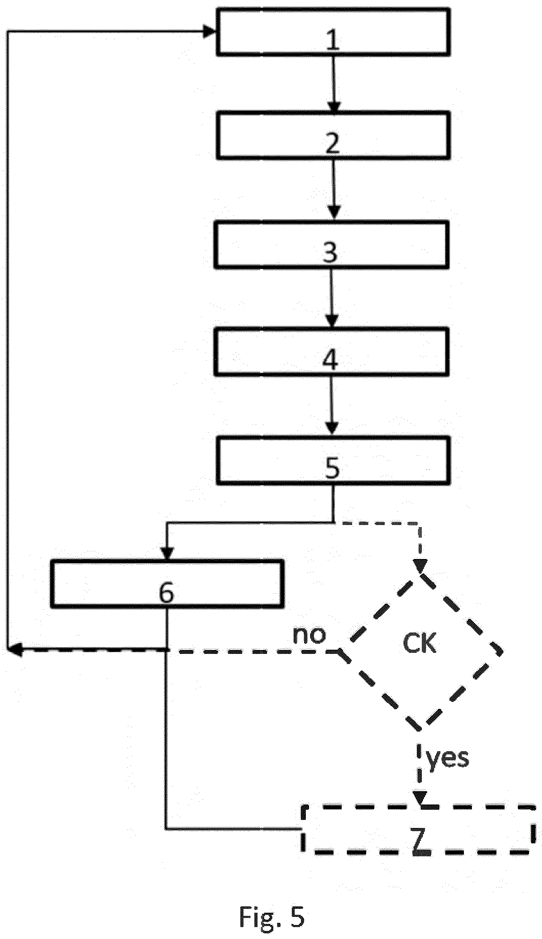

In accordance with figure 5, the method of the present invention discloses the following steps executed continuously in the same order:

- (Step 1) acquisition of a pointcloud with a single or multiple beam(s) by means of the 3D sensor, wherein each point of the pointcloud has an associated value representing a corresponding reflectance or RGB colour,
- (Step 2) a bottom left and a bottom right areas are selected, including a subset of the original points, while the remaining areas are deleted or neglected,
- (Step 3) association to the selected points of a weight ($w_i$) which is inversely proportional to the height ($y_i$) of the point in the pointcloud and inversely proportional to its reflectance or brightness ($i_i$),
- (Step 4) calculation of a linear regression on the selected points, having coordinates ($x_i$, $y_i$) and their corresponding weights $w_i$, approximating the terrain profile,
- (Step 5) calculation of the angle (α) of the lateral slope from the linear regression,
- (Step 6) Controlling of the vehicle geometry on the basis of said angle to compensate such slope variation.

The Step CK is used to recognize those cases in which alfa exceeds or reaches the rollover angle and Step 7 relates to the driver warning and/or further countermeasures.

According to a preferred embodiment of the invention, the vehicle geometry is controlled on the basis of an inclinometer or inertial sensor, which provides the current machine angle with respect to an ideally flat terrain, while the slope calculation is used during transitions to make the vehicle geometry variation as fast as possible.

The procedure is repeated while the machine moves forward, since the terrain is continuously scanned and a 3D surface of the soil ahead can be reconstructed. This allows to minimize trees damages and to increase yield since the shakers can operate in ideal conditions. In addition, the presence of bumps, holes, ditches can be detected in order to avoid rollover and, in general, to control the suspension system in an active and predictive manner for increasing the overall comfort for the operator.

The present invention can be implemented advantageously in a computer program comprising program code means for performing one or more steps of such method, when such program is run on a computer. For this reason, the patent shall also cover such computer program and the computer-readable medium that comprises a recorded message, such computer-readable medium comprising the program code means for performing one or more steps of such method, when such program is run on a computer.

Many changes, modifications, variations and other uses and applications of the subject invention will become apparent to those skilled in the art after considering the specification and the accompanying drawings which disclose preferred embodiments thereof as described in the appended claims.

EP 4 309 016 B1

The features disclosed in the prior art background are introduced only in order to better understand the invention and not as a declaration about the existence of known prior art. In addition, said features define the context of the present invention, thus such features shall be considered in common with the detailed description.

Further implementation details will not be described, as the man skilled in the art is able to carry out the invention starting from the teaching of the above description.


**Claims**

1. A method for calculating in advance a lateral slope variation during harvesting operation of a plantation such as oranges, grapes, coffee, almonds, olives and similar row planted crops, by means of a 3D sensor (3DS), such as a LiDAR, stereocamera, a RADAR, or an ultrasonic array, interfaced with processing means (CPU) of an agricultural vehicle (V), the method is **characterized in** comprising the following steps in the same order cyclically executed:

    - step 1, acquisition of a pointcloud with a single or multiple beam(s) by means of the 3D sensor, wherein each point of the pointcloud has an associated value representing a corresponding reflectance or RGB colour,
    - step 2, selection of a bottom left and a bottom right areas, including a subset of the original points while the remaining areas are deleted or neglected by means of a mask,
    - step 3, association to each point of the selected areas of a weight ($w_i$) which is inversely proportional to the height ($y_i$) of the point in the pointcloud and inversely proportional to its reflectance or brightness ($i_i$), then
    - step 4, calculation of a linear regression on the selected points, having coordinates ($x_i$, $y_i$) and their corresponding weights ($w_i$), approximating the terrain profile,
    - step 5, calculation of the angle ($\alpha$) of the lateral slope from the linear regression, then
    - step 6, Controlling of the vehicle geometry on the basis at least of said angle to compensate such lateral slope variation.

2. Method according to claim 1, further comprising

    - (CK) checking whether said angle ($\alpha$) exceeds a predetermined threshold, in negative case returning to Step 1, otherwise
    - step 7, warning a vehicle driver and/or stopping the vehicle.

3. Method according to anyone of the previous claims, wherein the cyclical execution is started when

    - harvesting means (R) are activated and/or when manually activated and/or when a relative navigation system recognizes the vehicle being across a plantation AND
    - the vehicle moves forward.

4. Method according to any one of the previous claims, wherein said vehicle geometry includes a suspension levelling system.

5. Method according to any one of the previous claims, wherein the vehicle comprises an inclinometer or inertial means to detect a current lateral inclination of the vehicle and wherein said geometry control step includes gradually adjusting the vehicle geometry on the basis of said angle ($\alpha$).

6. Method according to any one of the previous claims 1 - 4, wherein an inclinometer or inertial means are implemented to detect a current lateral inclination of the vehicle and wherein said geometry control step further includes a differential compensation of the vehicle geometry on the basis of the current lateral inclination and said angle ($\alpha$).

7. Harvesting vehicle arranged as a building portal to pass over a plantation such as oranges, grapes, coffee, almonds, olives and similar row planted crops with right wheels and left wheels arranged to move on opposite sides of the plantation and including processing means (CPU) and a 3D sensor (3DS), such as a LiDAR, stereocamera, RADAR, or an ultrasonic array interfaced with the processing means, the 3D sensor being arranged on a top frontal position to acquire a pointcloud, wherein each point of the pointcloud has an associated value representing a corresponding reflectance or RGB colour and said processing means are arranged to extract a bottom left and a bottom right areas from said point cloud and to calculate, for each point of said extracted areas, a weight ($w_i$) which is inversely proportional to the height ($y_i$) of the point in the pointcloud and inversely proportional to its reflectance or brightness ($i_i$), and to calculate a linear regression on the selected points, having coordinates ($x_i$, $y_i$) and their corresponding weights

($w_i$), approximating a terrain profile, and to calculate of the angle ($\alpha$) of the lateral slope from the linear regression and to control a the vehicle geometry on the basis of said angle to compensate a lateral slope variation.

8. Computer program comprising computer program code means adapted to perform all the steps of any claim from 1 to 6, when said program is run on a computer.

9. A computer readable medium having a program recorded thereon, said computer readable medium comprising computer program code means adapted to perform all the steps of any claim from 1 to 6, when said program is run on a computer.

**Patentansprüche**

1. Verfahren zur Vorausberechnung einer Seitenneigungsänderung während eines Erntebetriebs einer Bepflanzung, wie z.B. von Orangen, Trauben, Kaffee, Mandeln, Oliven und ähnlichem in Reihen gepflanztem Erntegut, mittels eines 3D-Sensors (3DS), wie eines LiDAR, einer Stereokamera, eines RADAR oder eines Ultraschallarrays, der mit Verarbeitungseinrichtungen (CPU) eines landwirtschaftlichen Fahrzeugs (V) verbunden ist, wobei das Verfahren **dadurch gekennzeichnet ist, dass** es die folgenden Schritte in derselben Reihenfolge zyklisch ausgeführt umfasst:

   - Schritt 1: Erfassen einer Punktwolke mit einem oder mehreren Strahlen mittels des 3D-Sensors, wobei jeder Punkt der Punktwolke einen zugeordneten Wert aufweist, der eine entsprechende Reflexion oder RGB-Farbe darstellt,
   - Schritt 2: Auswählen eines unteren linken und eines unteren rechten Bereichs, umfassend eine Teilmenge der ursprünglichen Punkte, während die verbleibenden Bereiche mittels einer Maske gelöscht oder verworfen werden,
   - Schritt 3: Zuordnen zu jedem Punkt der ausgewählten Bereiche eines Gewichts ($w_i$), das umgekehrt proportional zur Höhe ($y_i$) des Punktes in der Punktwolke und umgekehrt proportional zu dessen Reflexion oder Helligkeit ($i_i$) ist, und dann
   - Schritt 4: Berechnen einer linearen Regression aus den ausgewählten Punkten mit den Koordinaten ($x_i$, $y_i$) und ihrem entsprechenden Gewicht ($w_i$), wobei das Bodenprofil angenähert wird,
   - Schritt 5: Berechnen des Winkels ($\alpha$) der Seitenneigung aus der linearen Regression, und dann
   - Schritt 6: Steuern der Fahrzeuggeometrie basierend zumindest auf dem Winkel, um eine solche Seitenneigungsänderung zu kompensieren.

2. Verfahren nach Anspruch 1, wobei das Verfahren weiterhin umfasst:

   - (CK) Überprüfen, ob der Winkel ($\alpha$) einen vorbestimmten Grenzwert überschreitet, im negativen Fall Rückkehr zu Schritt 1, andernfalls
   - Schritt 7: Warnen eines Fahrzeugführers und/oder Anhalten des Fahrzeugs.

3. Verfahren nach einem der vorhergehenden Ansprüche, wobei das zyklische Ausführen gestartet wird, wenn

   - Erntemittel (R) aktiviert sind und/oder manuell aktiviert werden und/oder ein relatives Navigationssystem erkennt, dass sich das Fahrzeug über einer Bepflanzung befindet, UND
   - sich das Fahrzeug vorwärtsbewegt.

4. Verfahren nach einem der vorhergehenden Ansprüche, wobei die Fahrzeuggeometrie ein Federungsnivellierungssystem umfasst.

5. Verfahren nach einem der vorhergehenden Ansprüche, wobei das Fahrzeug einen Neigungsmesser oder inertiale Mittel umfasst, um eine aktuelle Seitenneigung des Fahrzeugs zu erfassen, und wobei der Schritt des Steuerns der Geometrie ein allmähliches Anpassen der Fahrzeuggeometrie basierend auf dem Winkel ($\alpha$) umfasst.

6. Verfahren nach einem der vorhergehenden Ansprüche 1-4, wobei ein Neigungsmesser oder inertiale Mittel dazu implementiert sind, eine aktuelle Seitenneigung des Fahrzeugs zu erfassen, und wobei der Schritt des Steuerns der Geometrie weiterhin eine differenzielle Kompensation der Fahrzeuggeometrie basierend auf der aktuellen Seitenneigung und dem Winkel ($\alpha$) umfasst.

**7.** Erntefahrzeug, das als Portal zum Überfahren einer Bepflanzung, wie von Orangen, Trauben, Kaffee, Mandeln, Oliven und ähnlichem in Reihen gepflanztem Erntegut, ausgebildet ist und rechte und linke Räder umfasst, die dazu eingerichtet sind, sich auf gegenüberliegenden Seiten der Bepflanzung zu bewegen, und umfassend Verarbeitungseinrichtungen (CPU) und einen 3D-Sensor (3DS), wie ein LiDAR, eine Stereokamera, RADAR oder ein Ultraschallarray, der mit den Verarbeitungseinrichtungen verbunden ist, wobei der 3D-Sensor in einer oberen vorderen Position angeordnet ist, um eine Punktwolke zu erfassen, wobei jeder Punkt der Punktwolke einen zugeordneten Wert aufweist, der eine entsprechende Reflexion oder RGB-Farbe darstellt, und wobei die Verarbeitungseinrichtungen dazu eingerichtet sind, einen unteren linken und einen unteren rechten Bereich aus der Punktwolke zu extrahieren und für jeden Punkt der extrahierten Bereiche ein Gewicht ($w_i$) zu berechnen, welches umgekehrt proportional zur Höhe ($y_i$) des Punktes in der Punktwolke und umgekehrt proportional zu dessen Reflexion oder Helligkeit ($i_i$) ist, und eine lineare Regression aus den ausgewählten Punkten mit den Koordinaten ($x_i$, $y_i$) und deren entsprechenden Gewicht ($w_i$) zu berechnen, um ein Bodenprofil anzunähern, und den Winkel ($\alpha$) der Seitenneigung aus der linearen Regression zu berechnen und die Fahrzeuggeometrie basierend auf dem Winkel ($\alpha$) zu steuern, um eine Seitenneigungsänderung zu kompensieren.

**8.** Computerprogramm, umfassend Computerprogramm-Codemittel, die dazu eingerichtet sind, alle Schritte nach einem der Ansprüche 1 bis 6 auszuführen, wenn das Programm auf einem Computer ausgeführt wird.

**9.** Computerlesbares Medium, auf dem ein Programm gespeichert ist, wobei das computerlesbare Medium Computerprogramm-Codemittel umfasst, die dazu eingerichtet sind, alle Schritte nach einem der Ansprüche 1 bis 6 auszuführen, wenn das Programm auf einem Computer ausgeführt wird.

**Revendications**

**1.** Un procédé pour calculer à l'avance une variation de pente latérale pendant l'opération de récolte d'une plantation d'orangers, de vignes, de caféiers, d'amandiers, d'oliviers ou d'autres arbres similaires plantés en rang, à l'aide d'un capteur 3D (3DS), comme un LiDAR, une caméra stéréoscopique, un RADAR ou un réseau ultrasonique, couplé à des moyens de traitement (CPU) d'un véhicule agricole (V), le procédé est **caractérisé en ce qu'**il comprend les étapes suivantes, exécutées cycliquement dans le même ordre :

- étape 1, acquisition d'un nuage de points avec un ou plusieurs faisceaux à l'aide du capteur 3D, dans lequel chaque point du nuage de points a une valeur associée représentant une réflectance ou une couleur RVB correspondante,
- étape 2, sélection d'une zone inférieure gauche et d'une zone inférieure droite, incluant un sous-ensemble des points d'origine, tandis que les zones restantes sont supprimées ou ignorées à l'aide d'un masque,
- étape 3, association à chaque point des zones sélectionnées d'un poids ($w_i$) qui est inversement proportionnel à la hauteur ($y_i$) du point dans le nuage de points et inversement proportionnel à sa réflectance ou luminosité ($i_i$), puis
- étape 4, calcul d'une régression linéaire au niveau des points sélectionnés, ayant des coordonnées ($x_i$, $y_i$) et leurs poids correspondants ($w_i$), avoisinant le profil du terrain
- étape 5, calcul de l'angle ($\alpha$) de la pente latérale à partir de la régression linéaire, puis
- étape 6, contrôle de la géométrie du véhicule en fonction au moins dudit angle pour compenser cette variation de pente latérale.

**2.** Procédé selon la revendication 1, comprenant en outre

- (CK) la vérification si ledit angle ($\alpha$) excède un seuil prédéterminé, dans le cas contraire, revenir à l'étape 1, sinon
- étape 7, avertissement du conducteur du véhicule et/ou arrêt du véhicule.

**3.** Procédé selon l'une quelconque des revendications précédentes, dans lequel l'exécution cyclique est lancée

- lorsque les moyens de récolte (R) sont activés et/ou lorsqu'ils sont activés manuellement et/ou lorsqu'un système de navigation relatif reconnaît que le véhicule se trouve dans une plantation ET
- lorsque le véhicule avance.

**4.** Procédé selon l'une quelconque des revendications précédentes, dans lequel ladite géométrie du véhicule inclut un système de nivellement de suspension.

5. Procédé selon l'une quelconque des revendications précédentes, dans lequel le véhicule comprend un inclinomètre ou des moyens inertiels de détection d'une inclinaison latérale actuelle du véhicule et dans lequel ladite étape de contrôle de la géométrie inclut l'ajustement progressif de la géométrie du véhicule en fonction dudit angle ($\alpha$).

6. Procédé selon l'une quelconque des revendications 1 à 4 précédentes, dans lequel un inclinomètre ou des moyens inertiels sont mis en œuvre pour détecter une inclinaison latérale actuelle du véhicule et dans lequel ladite étape de contrôle de la géométrie inclut en outre une compensation différentielle de la géométrie du véhicule en fonction de l'inclinaison latérale actuelle et dudit angle ($\alpha$).

7. Véhicule de récolte agencé sous la forme d'un portique pour passer au-dessus d'une plantation d'orangers, de vignes, de caféiers, d'amandiers, d'oliviers ou d'autres arbres similaires plantés en rang équipé de roues droites et de roues gauches agencées pour se déplacer sur les côtés opposés de la plantation et incluant des moyens de traitement (CPU) et un capteur 3D (3DS), comme un LiDAR, une caméra stéréoscopique, un RADAR ou un réseau ultrasonique couplé aux moyens de traitement, le capteur 3D étant agencé dans une position frontale supérieure pour acquérir un nuage de points, dans lequel chaque point du nuage de points a une valeur associée représentant une réflectance ou une couleur RVB correspondante, et lesdits moyens de traitement sont agencés pour extraire une zone inférieure gauche et une zone inférieure droite à partir dudit nuage de points et pour calculer, pour chaque point desdites zones extraites, un poids ($w_i$) qui est inversement proportionnel à la hauteur ($y_i$) du point dans le nuage de points et inversement proportionnel à sa réflectance ou luminosité ($i_i$), et pour calculer une régression linéaire au niveau des points sélectionnés, ayant des coordonnées ($x_i$, $y_i$) et leurs poids correspondants ($w_i$), avoisinant un profil de terrain, et pour calculer l'angle ($\alpha$) de la pente latérale à partir de la régression linéaire et pour contrôler la géométrie du véhicule en fonction dudit angle pour compenser une variation de pente latérale.

8. Programme informatique comportant des moyens pour coder un programme informatique, adapté pour réaliser toutes les étapes de l'une quelconque des revendications 1 à 6, lorsque ledit programme est exécuté sur un ordinateur.

9. Un support lisible par ordinateur sur lequel est enregistré un programme, ledit support lisible par ordinateur comprenant des moyens pour coder un programme informatique adapté pour exécuter toutes les étapes de l'une quelconque des revendications 1 à 6, lorsque ledit programme est exécuté sur un ordinateur.

Fig. 1

Fig. 2

Fig. 3

Fig. 4

Fig. 5

Fig. 6

**REFERENCES CITED IN THE DESCRIPTION**

**Patent documents cited in the description**

- US 2019261550 A1